# EUROPEAN PATENT SPECIFICATION

(11) **EP 1 899 841 B1**
(45) Date of publication and mention of the grant of the patent: **17.05.2017**
(21) Application number: 06786009.8
(22) Date of filing: 30.06.2006
(51) Int. Cl.: G06F 15/16, H04L 29/06

(54) **ORIGIN AWARE COOKIE VERIFICATION SYSTEMS AND METHODS**
SYSTEME UND VERFAHREN FÜR HERKUNFTSBEWUSSTE ÜBERPRÜFUNG VON COOKIES
SYSTEMES ET PROCEDES DE VERIFICATION DE FICHIERS DE TEMOINS CONSCIENTS DE L'ORIGINE

(30) Priority: 30.06.2005 US 172625
(43) Date of publication of application: 19.03.2008
(73) Proprietor: eBay Inc., San Jose, CA 95125 (US)
(72) Inventor: YAO, Yitao, Saratoga, California 95070 (US); PALAIMA, Mark, P., Saratoga, California 95070 (US); GOLDBERG, Arnold, Saratoga, California 95070 (US)
(74) Representative: Collins, John David
(86) International application number: PCT/US2006/025665
(87) International publication number: WO 2007/005652

(56) References cited:
- WO-A-98/09447
- US-A- 5 727 156
- US-A1- 2003 097 564
- US-A1- 2004 148 351
- US-A1- 2005 027 709
- US-B1- 6 415 322
- US-B1- 6 772 333
- US-B1- 6 785 769
- SAMAR V: "Single sign-on using cookies for Web applications" ENABLING TECHNOLOGIES: INFRASTRUCTURE FOR COLLABORATIVE ENTERPRISES, 1 999. (WET ICE '99). PROCEEDINGS. IEEE 8TH INTERNATIONAL WORKSHOPS ON STANFORD, CA, USA 16-18 JUNE 1999, LOS ALAMITOS, CA, USA,IEEE COMPUT. SOC, US, 16 June 1999 (1999-06-16), pages 158-163, XP010358606 ISBN: 978-0-7695-0365-3
- ARMAN DANESH: "Teach Yourself JavaScript in a Week, Chapter 9: Remember where you've been with cookies" INTERNET CITATION, [Online] XP002299088 Retrieved from the Internet: URL:http://docs.rinet.ru/JS7/tjsfmfi.htm> [retrieved on 2004-10-04]

## Description

### Related Applications

This application claims the priority benefit of U.S. Application Serial No. 11/172,625 filed June 30, 2005.

### Field

The embodiments relate generally to sending and receiving web page transmission and reception and more particularly to systems and methods for verifying that web pages are sent to the correct entity.

### Limited Copyright Waiver

A portion of the disclosure of this patent document contains material to which the claim of copyright protection is made. The copyright owner has no objection to the facsimile reproduction by any person of the patent document or the patent disclosure, as it appears in the U.S. Patent and Trademark Office file or records, but reserves all other rights whatsoever.

### Background

Since its inception, the World-Wide Web ("Web") has continuously grown to include literally billions of pages of information. Web pages typically comprise HTML (HyperText Markup Language) text with tags indicating how the text is to be displayed on a computer screen, typically through a web browser such as Internet Explorer, Netscape Navigator, or Mozilla Firefox.

The protocol for sending and receiving web pages, the HyperText Transfer Protocol (HTTP), was designed to be stateless. That is, requests for page information are processed independently and without any information regarding previous page requests. Stateless protocols are typically easier to implement than stateful protocol in which information is maintained between requests. However, for some types of web applications, there is a need to maintain some type of state information. For example, it is now common for users to have to "sign in" in order to view certain web pages. Examples of such web applications include ecommerce (electronic commerce) applications, subscription based applications, and applications that may present web pages that are customized with personalized information about the requestor. For these and other types of web applications, it is desirable to maintain state information between page requests.

One mechanism that has been developed to aid in maintaining state information between page requests is the web "cookie". A cookie is a small file that is stored on a client computer that requests a web page. The cookie file contains information that may be read by a web server when responding to a page request. Such information may include a user identification, shopping cart information, and other data that may be useful as a user browses through the web pages that make up a web site. Cookies may also have an expiration time after which they are to be considered invalid.

While cookies have been useful in providing a means to carry state information from one request to another, they also can lead to security problems. In order to decrease response time and reduce network traffic, some entities such as ISPs (Internet Service Providers), gateways, or other organization may employ a proxy or caching server that caches previously requested web pages and provides the cached version of the page to a requestor. This typically reduces network and web server overhead because the web server does not have to process a page request if it is available from a proxy or caching server and/or because the request and associated response do not have to travel the entire network between the requesting application and the page originator.

Unfortunately, a proxy or caching server may also cache cookies, and may provide the cached cookies to a page requestor. In these cases, it is possible that the cookie will contain information allowing private or personalized content to be delivered to the wrong user. Additionally, once delivered to the wrong user, a private or personalization cookie may allow an unauthorized user to view and tamper with information they should not be able to access.

### Summary

Systems and methods operate to verify the origin of page requests. The systems and methods use a client identification value that may be sent from a client to a server. The server uses the client identification value to determine that the origin of the request matches the origin of previous requests so that personalized or other private data is not improperly sent to the wrong client.

One aspect of the systems and methods includes creating the client identification value on the client and sending the client identification value to a server. The client identification value may then be compared in subsequent requests to the server to verify that the subsequent request comes from the same origin.

A further aspect of the systems and methods includes extracting a client-side transformed composite client identification value sent from a server to the client and comparing with the value maintained by the client. If the two match, processing a response page continues. Otherwise personalization content or other private data that would otherwise appear on the page is not displayed.

The present invention describes systems, methods, and machine-readable media of varying scope. In addition to the aspects and advantages of the present invention described in this summary, further aspects and advantages of the invention will become apparent by reference to the drawings and by reading the detailed description that follows.

### Brief Description of the Drawings

FIG. 1 is a block diagram of logical components of systems according to example embodiments.
FIG. 2 is a flowchart illustrating methods according to embodiments of the invention.
FIG. 3 is a flowchart illustrating methods according to embodiments of the invention.
FIGs. 4A and 4B are block diagrams illustrating components of a client identification value according to embodiments of the invention.
FIG. 5 is a block diagram illustrating an example message sequence produced in accordance with embodiments of the invention.
FIG. 6 is a block diagram illustrating components of a computing device that may execute systems and methods according to embodiments of the invention.

### Detailed Description

In the following detailed description of exemplary embodiments of the invention, reference is made to the accompanying drawings which form a part hereof, and in which is shown by way of illustration specific exemplary embodiments in which the invention may be practiced. These embodiments are described in sufficient detail to enable those skilled in the art to practice the invention, and it is to be understood that other embodiments may be utilized and that logical, mechanical, electrical and other changes may be made without departing from the scope of the present invention.

Some portions of the detailed descriptions which follow are presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities. Unless specifically stated otherwise as apparent from the following discussions, terms such as "processing" or "computing" or "calculating" or "determining" or "displaying" or the like, refer to the action and processes of a computer system, or similar computing device, that manipulates and transforms data represented as physical (e.g., electronic) quantities within the computer system's registers and memories into other data similarly represented as physical quantities within the computer system memories or registers or other such information storage, transmission or display devices.

For the purposes of this specification, the term "client-side" is used to indicate that the value was generated by a client. Similarly, the term "server-side" is used to indicate that the value was generated by a server.

In the Figures, the same reference number is used throughout to refer to an identical component which appears in multiple Figures. Signals and connections may be referred to by the same reference number or label, and the actual meaning will be clear from its use in the context of the description.

The description of the various embodiments is to be construed as exemplary only and does not describe every possible instance of the invention. Numerous alternatives could be implemented, using combinations of current or future technologies, which would still fall within the scope of the claims. The following detailed description is, therefore, not to be taken in a limiting sense, and the scope of the present invention is defined only by the appended claims.

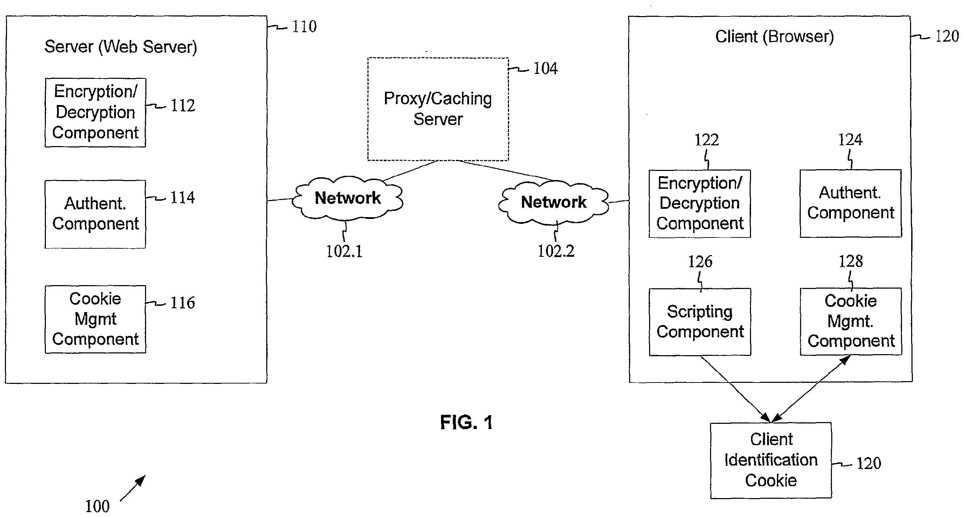

FIG. 1 is a block diagram illustrating logical components of a system 100 according to example embodiments. In some embodiments, system 100 includes a web server 110 and a client 120 communicably coupled through network segments 102.1 and 102.2. Network segments 102.1 and 102.2 may be any type of wired or wireless network. In varying embodiments, network segments 102 may be part of a local area network, a wide area network, an intranet, or the Internet. The embodiments of the invention are not limited to a particular type of network.

In some embodiments, server 110 is a web server that provides web pages to clients 120. Examples of such web servers include the IIS (Internet Information Service) web server, the Apache web server, and the Netscape web server. The embodiments of the invention are not limited to a particular web server. Server 110 may include an encryption / decryption component 112, an authentication component 114, and a cookie management component 116.

Encryption/Decryption component 112 provides a mechanism to encrypt and/or decrypt information. It is sometimes desirable for server 112 to exchange encrypted messages with a client 120, for example when receiving password data or registration data. Encryption/Decryption component 112 may be used to encrypt or decrypt such messages. In some embodiments, encryption/decryption component 112 supports Crypt-MD5 encryption and decryption. Additionally, an encryption component may include hashing functions. Those of skill in the art will appreciate that various encryption/decryption methods are now available and others may be developed in the future and that such encryption methods are within the scope of the inventive subject matter.

Authentication component 114 provides a mechanism to create and read digitally a signed message such that a receiver of a signed message can determine that the message is authentic (i.e. from the source the message indicates it is from) and that the message has not been tampered with. Various authentication mechanisms are known in the art and may be used by server 110. The embodiments of the invention are not limited to a particular authentication mechanism.

Cookie management component 116 manages reading and creation of cookies for server 110. Cookie management component 116 may use authentication component 114 and encryption/decryption component 112 to process signed and/or encrypted portions of cookies.

In some embodiments, client 120 is a web application such as a browser that requests web pages from serve 110. Examples of such web browsers include Internet Explorer, Mozilla Firefox, and Netscape Navigator. The embodiments of the invention are not limited to a particular client 120. In varying embodiments, client 120 may include an encryption / decryption component 122, an authentication component 124, scripting component 126 and a cookie management component 128.

Like its server based counterpart, encryption/decryption component 122 provides a mechanism to encrypt and/or decrypt information. Encryption/Decryption component 122 may be used to encrypt or decrypt messages exchanged with server 110. In some embodiments, encryption/decryption component 122 supports Crypt-MD5 encryption and decryption. Additionally, an encryption component may include hashing functions. Those of skill in the art will appreciate that various encryption/decryption methods are now available and others may be developed in the future and that such encryption methods are within the scope of the inventive subject matter.

Authentication component 124 provides a mechanism to create and read digitally a signed message such that a receiver of a signed message can determine that the message is authentic (i.e. from the source the message indicates it is from) and that the message has not been tampered with. Various authentication mechanisms are known in the art and may be used by client 120. The embodiments of the invention are not limited to a particular authentication mechanism.

Cookie management component 128 manages reading and creation of cookies for client 120. Cookie management component 128 may use authentication component 124 and encryption/decryption component 122 to process signed and/or encrypted portions of cookies.

Scripting component 126 provides a mechanism for interpreting executable scripts that may be downloaded or otherwise placed on a computer system executing browser 120. In some embodiments, scripting component 126 may interpret JavaScript. In alternative embodiments, scripting component 126 may read Visual Basic Script (VB Script). Other types of scripting languages either now known or developed in the future may be read and interpreted by scripting component 126.

Proxy/Caching server 104 may act as a proxy for a web service and/or may cache previously generated web pages. Proxy/Caching server 104 may serve previously generated pages to a client 120 if it determines that a request is for the same page as a previous request. The cached information may include cookies associated with the page.

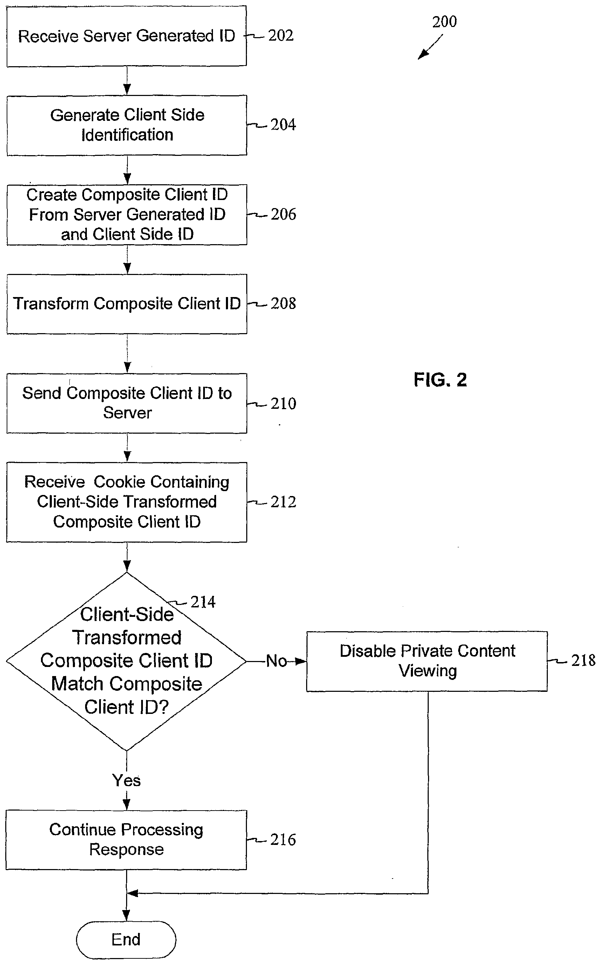

Further details on the operation of the above components will be described below with reference to FIGs. 2-5.

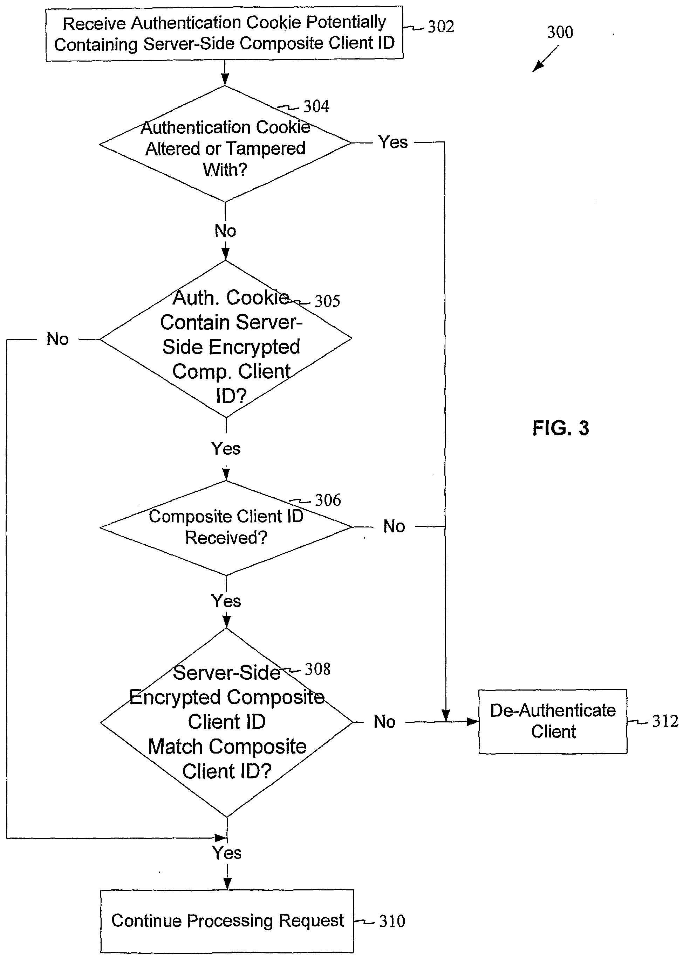

FIGs. 2 and 3 are flowcharts illustrating methods for verifying the origin of web page requests according to embodiments of the invention. The methods to be performed by the operating environment constitute computer programs made up of computer-executable instructions. Describing the methods by reference to a flowchart enables one skilled in the art to develop such programs including such instructions to carry out the method on suitable processors for gaming machines (the processor or processors of the computer executing the instructions from machine-readable media). The methods illustrated in FIGs. 2 and 3 are inclusive of acts that may be taken by an operating environment executing an exemplary embodiment of the invention.

FIG. 2 is a flowchart illustrating a method typically executed by a client that may be used to generate a client identification value and use the client identification value to verify the origin of a page request. In some embodiments, the method begins by receiving a server generated identification value (block 202). The server generated ID may be received in response to a request for a sign-in page. For example, a user may request to sign-in to an electronic commerce web site, a subscription based web site, or other web site that may provide private or personalized data.

Next, the client generates a client side identification value (block 204). In some embodiments, the client side identification value is generated through the execution of a script such as a JavaScript or VB script. In particular embodiments, the client side identification value comprises eight characters. An example script capable of generating for generating 62⁸ (218 * 10¹²) unique client side identification values of eight characters is as follows:

```
          <script language="javascript" type="text/javascript">
             var clientIdValue = '';
             function genClientId() {
                var chars =
        "0123456789ABCDEFGHIJKLMNOPQRSTUVWXTZabcdefghijklmnopq
       rstuvwxyz";
                var length = 8;
                for (var i=0; i<length; i++) {
                   var index =
                   Math.floor(Math.random()*chars.length);
                   clientld += chars.substring(index, index+1);
                }
             }
          </script>
```

Next, the system creates a composite client identification value using the server generated ID value and the client side identification value (block 206). In some embodiments, the composite client identification value may be created by appending the server generated ID value and the client side identification value. Alternative mechanisms for combining the server generated ID value and the client side identification value are possible and within the scope of the inventive subject matter.

Next, in some embodiments the composite client identification value is transformed (block 208). The transformation may be a hashing function. An example hash function used in some embodiments is as follows:

```
       public long JsHash(String str)
       {
          int hash = 0;
          for(int i = 0; i < str.1ength(); i++)
          {
            hash = str.charAt(i) + (hash « 6) + (hash « 16) - hash;
          }
          return (hash & 0x7FFFFFFF);
       }
```

In alternative embodiments, the transformation may comprise applying a digest algorithm to the composite client identification value.

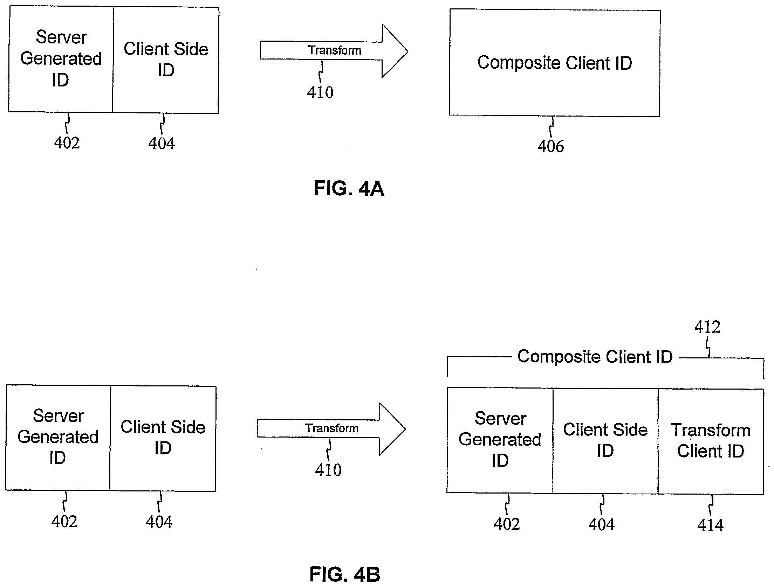

FIGs 4A and 4B are block diagrams illustrating how the server generated ID value and the client side identification value may be used to create a composite client identification value. In FIG. 4A, the server generated ID 402 and the client side ID 404 are appended to one another. A transformation 410 is applied to the two values to form an integral transformed composite client ID 406.

In FIG. 4B, the server generated ID 402 and the client side ID 404 are appended to one another. A transformation 410 is applied to the two values, resulting in a transformed client ID value 414. This value is then appended to the server generated id 402 and client side ID 404 to form composite client ID 412.

Returning to FIG. 2, the composite client ID is sent by the client to the server (block 210)

Later, in some embodiments, the client receives a response from a server containing a personalization cookie (block 212). The personalization cookie may contain a client-side transformed clientID value. As noted above, the transformation may include hashing or digesting the clientID value.

Next, the client compares the client-side transformed composite client identification value in the personalization cookie with a transformed composite client identification value maintained by the client (block 214). If the two match, the client continues to process the web page that may contain personalized or private data (block 216). Otherwise, the client disables the viewing of personalized or private data (block 218).

In the method described above, the transformed client identification value is sent from the server to the client in a personalization cookie. Those of skill in the art will appreciate that other types of cookies could be used to contain the transformed client identification value, and that the use of these other types of cookies are within the scope of the inventive subject matter.

It should be noted that in the method of the embodiments described above, the server does not send a clear text version of the client identification value to a client. This is desirable because it avoids the problem of having a clear text version of the client identification value inappropriately cached on a caching or proxy server.

An exception to the above may occur in embodiments of the invention where the client is not capable of scripting, or where scripting has been disabled in the client. In these embodiments, the server send the client identification value once, for example when a user signs in to retrieve personalized data. The client then returns the untransformed server generated client identification value in requests to the server.

FIG. 3 is a flowchart illustrating a method 300 typically executed by a server that may use a composite client identification value to verify the origin of a page request. The method begins by receiving an authentication cookie that potentially contains a server-side encrypted composite client ID value (block 302). The authentication cookie is typically sent as part of a request for a web page containing personalized or private data.

The server checks the authentication and/or signing data to determine if the authentication cookie has been altered or tampered with (block 304). If the authentication cookie is determined to be tampered with or altered, the method proceeds to block 312 to de-authenticate the client.

Next, the server checks to see if an server-side encrypted composite client ID is contained by the cookie (block 305). If so, the server decrypts the server-side encrypted composite client ID. Otherwise, the authentication cookie was most likely received from a client that does not support origin checking. The method then proceeds to block 310 to continue processing the request.

Otherwise, the server checks to determine if a composite client ID value has also been received (block 306). If a composite client ID has been received, it is compared to the decrypted composite client ID in the authentication cookie (block 308). If they match, the request is most likely from the same client that previously requested personalized or private data. The server continues to process the request (block 310).

If a composite client ID is not received at block 306, or if the composite client ID does not match the decrypted composite client ID from the authentication cookie, then the server de-authenticates the client (block 312). Here the server may refuse to provide personalized or private data to the requesting client on the assumption that a different client issued the request than the original client. In some embodiments, the server may re-issue a sign-on request page in order to have the client provide the appropriate credentials (e.g. user ID and password) in order to allow the client to view the personalized or private data.

In some cases, a user may disallow cookies during a browser session. In this case, the server may detect that a composite client ID is not received and re-issue a sign-on request page forcing the user provide the appropriate credentials to regain access to pages containing personalized or private data. If cookies are disallowed, the server will not receive composite client ID values in subsequent responses and in some embodiments the server will no longer check to make sure requests for personalized data are coming from the same client as previous requests.

Similarly, a user may delete cookies during a browser session. Like the case described above, the server may detect that a composite client ID is not received and re-issue a sign-on page forcing the user provide the appropriate credentials to regain access to pages containing personalized or private data. However in this case, a subsequent response will contain a new composite client ID value, and the server will continue to check to make sure requests for personalized data are coming from the same client as previous requests using the new composite client ID values generated when the user provides sign-on credentials to request personalized or private data.

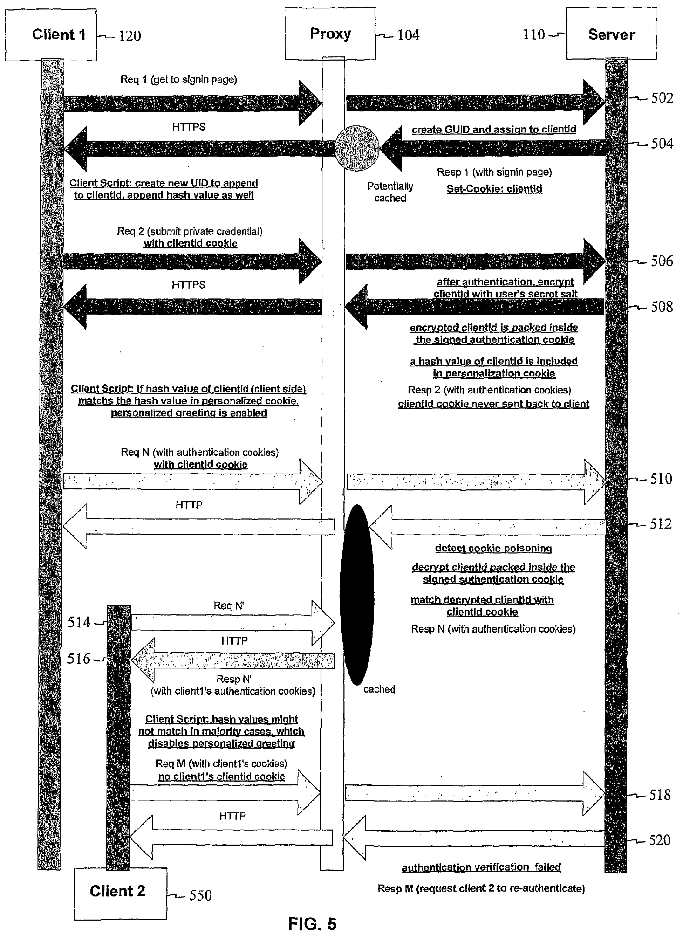

FIG. 5 is a block diagram illustrating an example message sequence produced in accordance with embodiments of the invention. The example message sequence begins when client 120 issues request 502 to server 110 to obtain a sign-in page. The request may be routed through a proxy server 104.

Server 110 then creates a GUID (Globally Unique Identifier) and assigns a server generated client ID. The server generated ID is sent to client 120 as part of response message 504. The response message may be securely sent using HTTPS.

Client 120 then generates a client side ID to append to the server generated ID and also generates a hash value to append to the composite client ID. The client then issues a request containing sign-in credentials and a client ID cookie containing the composite client ID in request message 506.

Server 110 authenticates the users credentials in message 506, and using a secret salt value associated with the user encrypts the composite client ID sent from the client. The encrypted value may be inserted into a signed authentication cookie. In addition, in some embodiments, a transformed value of the client ID is sent in a personalization cookie. The authentication cookie and the personalization cookie may be sent to the client in response 508. However, as noted above, the client ID is not returned to the server in a clear text form.

Client 120 may issue subsequent requests for personalized and/or private data in messages 510. The client may include authentication cookies, personalization cookies and clientid cookies.

Server 110 may check requests by detecting cookie poisoning using the message signature. In addition, server 110 decrypts the composite client identification value in the authentication cookie and compares it to the composite client identification value in the clientid cookie. If no poisoning or other tampering is apparent, and if the composite client ID values match, the server issues response message 512, with the authentication and personalization cookies. As part of issuing the response message, the server may update the cookies' validation time to insure that the cookies do not expire prematurely and will continue to be considered valid.

At some point in time, a second client 550 may issue a request 514 for personalization or private data, requesting a same web page as previously used by client 110. Proxy 104, either through error or misconfiguration may return a cached response 516 that includes client 110's authentication cookies. In this situation, client 550 may detect that the transformed value of the client ID does not match its client ID, or that its client id value does not match that in the cached response. Client 550 may then disable display of the personalization or private data.

Additionally, client 550 may send a subsequent request message 518 containing client 110's authentication cookie, but client 550 will not typically be able to generate the same client ID value as client 110. Server 110 may detect the mismatch or absence of client ID value match client 110, and issue a response message 520 indicating that authentication and/or verification failed. The response may request that client 550 reauthenticate in order to obtain the personalized or private data properly associated with client 550.

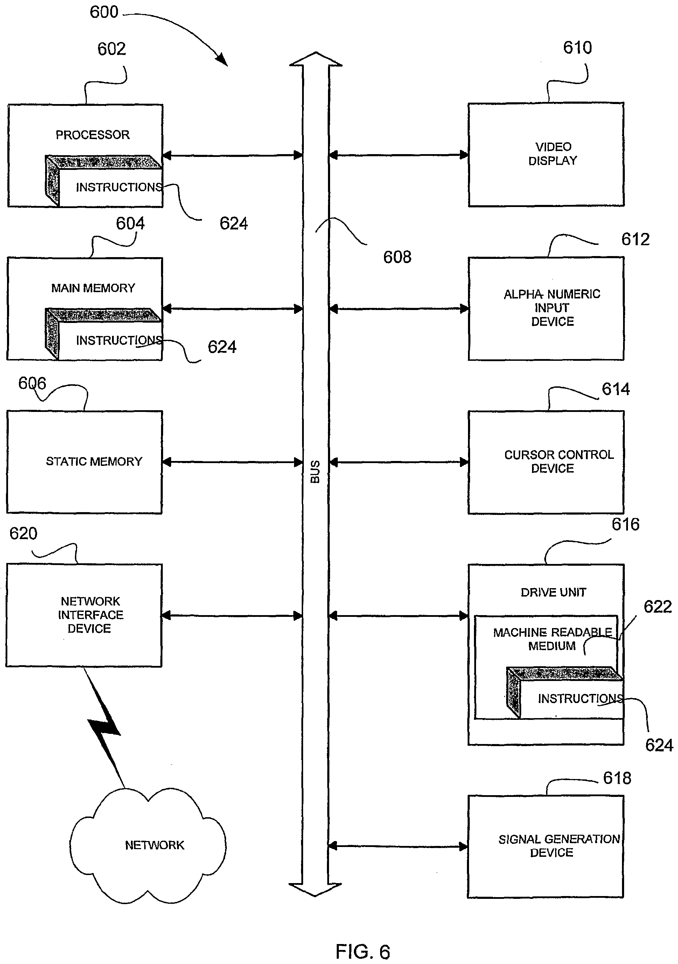

FIG. 6 is a block diagram illustrating major components of a computer system 600 within which a set of instructions, for causing the machine to perform any one or more of the methodologies discussed herein, may be executed. In alternative embodiments, the machines operate as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 600 includes a processor 602 (e.g., a central processing unit (CPU) a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), a cursor control device 614 (e.g., a mouse), a disk drive unit 616, a signal generation device 618 (e.g., a speaker) and a network interface device 620.

The disk drive unit 616 includes a machine-readable medium 622 on which is stored one or more sets of instructions (e.g., software 624) embodying any one or more of the methodologies or functions described herein. The software 624 may also reside, completely or at least partially, within the main memory 604 and/or within the processor 602 during execution thereof by the computer system 600, the main memory 604 and the processor 602 also constituting machine-readable media.

The software 624 may further be transmitted or received over a network 626 via the network interface device 620. The network 626may be any type of wired or wireless network and the network interface 620 may vary based on the type of network. In some embodiments, the network comprises a LAN (local area network). In alternative embodiments, the network may be a wide area network, a corporate network, or an intranet linking multiple networks. In further alternative embodiments, the network may comprise the Internet.

While the machine-readable medium 622 is shown in an exemplary embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to included, but not be limited to, solid-state memories, optical and magnetic media, and carrier wave signals, including optical and electromagnetic signals.

### Conclusion

Systems and methods for using cookies to verify the origins of web related request have been described. Although the present invention has been described with reference to specific example embodiments, it will be evident that various modifications and changes may be made to these embodiments without departing from the scope of the invention. Accordingly, the specification and drawings are to be regarded in an illustrative rather than a restrictive sense. Many other embodiments will be apparent to those of skill in the art upon reviewing the above description. Therefore, it is manifestly intended that this invention be limited only by the following claims and equivalents thereof.

## Claims

1. A computer-implemented method performed on a client (120), the method comprising:
receiving (202) a server generated identification value from a server (110);
generating (204) a client side identification value;
creating (206) a composite client identification value from the server generated client identification value and the client side identification value;
transforming (208) the composite client identification value;
returning (210) the composite client identification value to the server (110);
receiving (212) a cookie from the server (110), the cookie including a client-side transformed composite client identification value;
comparing (214) the client-side transformed composite client identification value with the composite client identification value; and
if the client-side transformed composite client identification value does not match the composite client identification value then disabling (218) private content viewing.

2. The computer-implemented method of claim 1, wherein the composite client identification value is transformed using an irreversible transformation.

3. The computer-implemented method of claim 1, wherein transforming the composite client identification value comprises hashing the composite client identification value.

4. The computer-implemented method of claim 1, wherein transforming the composite client identification value comprises digesting the composite client identification value.

5. The computer-implemented method of claim 1, wherein the cookie comprises a persistent cookie.

6. The computer-implemented method of claim 1, wherein the cookie comprises a session cookie.

7. The computer-implemented method of claim 1, wherein the cookie contains a server-side encrypted client identification value.

8. The computer-implemented method of claim 7, wherein the server-side encrypted client identification value is included in a signed portion of the cookie.

9. A computer-implemented method performed on a server (110), the method comprising:
receiving a composite client identification value created according to the method of claim 1 from a client computer (120);
receiving (320) a cookie from the client computer (120), the cookie including a server-side encrypted composite client identification value;
decrypting the server-side encrypted composite client identification value;
comparing the decrypted composite client identification value with the composite client identification value; and
if the decrypted composite client identification value does not match the composite client identification value then de-authenticating the client.

10. The computer-implemented method of claim 9, wherein de- authenticating the client includes reissuing a sign-on page to the client.

11. The computer-implemented method of claim 9, further comprising: generating a server generated identification value; sending the server generated identification value to the client computer (120) via a secure channel; receiving the composite client identification; encrypting the composite client identification value; inserting the composite client identification value into a cookie; and transmitting the cookie to the client computer (120).

12. A client computer (120) comprising:
a cookie management component (128) adapted to send and receive one or more cookies; and
a scripting component (126) adapted to execute one or more scripts, wherein the one or more scripts includes one or more scripts operable to perform operations including:
receive (202) a server generated identification value from a server (110);
generate (204) a client identification value,
create (206) a composite client identification value from the server generated client identification value and the client side identification value;
transform (208) the composite client identification value; and
return (210) the composite client identification value in a cookie to the server (110);
wherein the cookie management component (128) is operable to receive (212) a cookie from the server (110), the cookie including a client-side transformed composite client identification value; and the one or more scripts includes one or more scripts operable to:
compare (214) the client-side transformed composite client identification value with the composite client identification value; and
if the client-side transformed composite client identification value does not match the composite client identification value then disable (218) private content viewing.

13. A server (110) comprising:
a cookie management component (116) adapted to send and receive one or more cookies,
an encryption component (112) adapted to encrypt the one or more cookies; and
an authentication component (114) adapted to: authenticate the one or more cookies; read a composite client identification value from the one or more cookies, the composite client identification value being created from a server generated client identification value and a client side identification value; and de-authenticate a client if the composite client identification value does not match a server-side encrypted composite client identification value.

14. The server of claim 13, wherein the authentication component (114) is adapted to re-issue a sign-on page to a client upon detecting the client identification value does not match the server-side encrypted client identification value.

15. A machine-readable medium having computer executable instructions for performing a method according to any one of claims 1 to 11.

## Patentansprüche

1. Computer-implementiertes Verfahren, das auf einem Kunden (120) durchgeführt wird, wobei das Verfahren Folgendes umfasst:
Empfangen (202) eines Server-generierten Identifikationswertes von einem Server (110);
Generieren (204) eines kundenseitigen Identifikationswerts;
Erzeugen (206) eines zusammengesetzten Kunden-Identifikationswerts aus dem Server-generierten Kunden-Identifikationswert und dem kundenseitigen Identifikationswert;
Umwandeln (208) des zusammengesetzten Kunden-Identifikationswerts;
Zurückgeben (210) des zusammengesetzten Kunden-Identifikationswerts an den Server(110);
Empfangen (212) eines Cookies vom Server (110), wobei das Cookie einen kundenseitigen umgewandelten zusammengesetzten Kunden-Identifikationswert umfasst;
Vergleichen (214) des kundenseitigen umgewandelten zusammengesetzten Kunden-Identifikationswerts mit dem zusammengesetzten Kunden-Identifikationswert; und
wenn der kundenseitige umgewandelte zusammengesetzte Kunden-Identifikationswert nicht zum zusammengesetzten Kunden-Identifikationswert passt, dann Ausschalten (218) der privaten Inhaltsbetrachtung.

2. Computer-implementiertes Verfahren nach Anspruch 1, wobei der zusammengesetzte Kunden-Identifikationswert unter Verwendung einer irreversiblen Umwandlung umgewandelt wird.

3. Computer-implementiertes Verfahren nach Anspruch 1, wobei das Umwandeln des zusammengesetzten Kunden-Identifikationswerts das Hashing des zusammengesetzten Kunden-Identifikationswerts umfasst.

4. Computer-implementiertes Verfahren nach Anspruch 1, wobei das Umwandeln des zusammengesetzten Kunden-Identifikationswerts das Digesting des zusammengesetzten Kunden-Identifikationswerts umfasst.

5. Computer-implementiertes Verfahren nach Anspruch 1, wobei das Cookie ein persistentes Cookie umfasst.

6. Computer-implementiertes Verfahren nach Anspruch 1, wobei das Cookie ein Sitzungs-Cookie umfasst.

7. Computer-implementiertes Verfahren nach Anspruch 1, wobei das Cookie einen Server-seitigen verschlüsselten Kunden-Identifikationswert enthält.

8. Computer-implementiertes Verfahren nach Anspruch 7, wobei der Server-seitige verschlüsselte Kunden-Identifikationswert in einem signierten Abschnitt des Cookies umfasst ist.

9. Computer-implementiertes Verfahren, das auf einem Server (110) durchgeführt wird, wobei das Verfahren Folgendes umfasst:
Empfangen eines zusammengesetzten Kunden-Identifikationswerts, der nach dem Verfahren von Anspruch 1 von einem Kundencomputer (120) erzeugt wurde;
Empfangen (320) eines Cookies vom Kundencomputer (120), wobei das Cookie einen Server-seitigen verschlüsselten zusammengesetzten Kunden-Identifikationswert umfasst;
Entschlüsseln des Server-seitigen verschlüsselten zusammengesetzten Kunden-Identifikationswerts;
Vergleichen des entschlüsselten zusammengesetzten Kunden-Identifikationswerts mit dem zusammengesetzten Kunden-Identifikationswert; und
wenn der entschlüsselte zusammengesetzte Kunden-Identifikationswert nicht zum zusammengesetzten Kunden-Identifikationswert passt, dann Deauthentifizieren des Kunden.

10. Computer-implementiertes Verfahren nach Anspruch 9, wobei die Deauthentifizierung des Kunden die Neuausgabe einer Anmeldeseite an den Kunden umfasst.

11. Computer-implementiertes Verfahren nach Anspruch 9, weiter umfassend: Generieren eines Server-generierten Identifikationswerts; Senden des Server-generierten Identifikationswerts an den Kundencomputer (120) über einen sicheren Kanal; Empfangen der zusammengesetzten Kunden-Identifikation; Verschlüsseln des zusammengesetzten Kunden-Identifikationswerts; Einführen des zusammengesetzten Kunden-Identifikationswerts in ein Cookie; und Übertragen des Cookies an den Kundencomputer (120).

12. Kundencomputer (120), umfassend:
eine Cookie-Verwaltungskomponente (128), die angepasst ist, um ein oder mehrere Cookies zu senden und zu empfangen; und
eine Scripting-Komponente (126), die angepasst ist, um ein oder mehrere Scripts auszuführen, wobei das eine oder die mehreren Scripts ein oder mehrere Scripts umfassen, die betrieben werden können, um Operationen auszuführen, umfassend:
Empfangen (202) eines Server-generierten Identifikationswertes von einem Server (110);
Generieren (204) eines Kunden-Identifikationswerts;
Erzeugen (206) eines zusammengesetzten Kunden-Identifikationswerts aus dem Server-generierten Kunden-Identifikationswert und dem kundenseitigen Identifikationswert;
Umwandeln (208) des zusammengesetzten Kunden-Identifikationswerts; und
Zurückgeben (210) des zusammengesetzten Kunden-Identifikationswerts in einem Cookie an den Server (110);
wobei die Cookie-Verwaltungskomponente (128) betrieben werden kann, um ein Cookie vom Server (110) zu empfangen (212), wobei das Cookie einen kundenseitigen umgewandelten zusammengesetzten Kunden-Identifikationswert umfasst; und das eine oder die mehreren Scrips ein oder mehrere Scripts umfassen, die betrieben werden können, um:
den kundenseitigen umgewandelten zusammengesetzten Kunden-Identifikationswert mit dem zusammengesetzten Kunden-Identifikationswert zu vergleichen (214); und
wenn der kundenseitige umgewandelte zusammengesetzte Kunden-Identifikationswert nicht zum zusammengesetzten Kunden-Identifikationswert passt, dann die private Inhaltsbetrachtung auszuschalten (218).

13. Server (110), umfassend:
eine Cookie-Verwaltungskomponente (116), die angepasst ist, um ein oder mehrere Cookies zu senden und zu empfangen,
eine Verschlüsselungskomponente (112), die angepasst ist, um das eine oder die mehreren Cookies zu verschlüsseln; und
eine Authentifizierungskomponente (114), die angepasst ist, um: das eine oder die mehreren Cookies zu authentifizieren; einen zusammengesetzten Kunden-Identifikationswert aus dem einen oder aus den mehreren Cookies zu lesen, wobei der zusammengesetzte Kunden-Identifikationswert aus einem Server-generierten Kunden-Identifikationswert und einem kundenseitigen Identifikationswert erzeugt wird; und einen Kunden zu deauthentifizieren, wenn der Kunden-Identifikationswert nicht zu einem Server-seitigen verschlüsselten zusammengesetzten Kunden-Identifikationswert passt.

14. Server nach Anspruch 13, wobei die Authentifizierungskomponente (114) angepasst ist, um eine Anmeldeseite erneut an einen Kunden auszugeben, wenn nachgewiesen wird, dass der Kunden-Identifikationswert nicht zum Server-seitigen verschlüsselten Kunden-Identifikationswert passt.

15. Computerlesbares Medium, das Computer-ausführbare Anweisungen zur Durchführung eines Verfahrens nach einem der Ansprüche 1 bis 11 aufweist.

## Revendications

1. Procédé mis en oeuvre par ordinateur effectué sur un client (120), le procédé comprenant :
la réception (202) d'une valeur d'identification générée par serveur à partir d'un serveur (110) ;
la génération (204) d'une valeur d'identification côté client ;
la création (206) d'une valeur d'identification de client composite à partir de la valeur d'identification de client générée par serveur et de la valeur d'identification côté client ;
la transformation (208) de la valeur d'identification de client composite ;
le renvoi (210) de la valeur d'identification de client composite au serveur (110) ;
la réception (212) d'un témoin de connexion (cookie) à partir du serveur (110), le témoin de connexion comprenant une valeur d'identification de client composite transformée côté client ;
la comparaison (214) de la valeur d'identification de client composite transformée côté client avec la valeur d'identification de client composite ; et
si la valeur d'identification de client composite transformée côté client ne correspond pas à la valeur d'identification de client composite, alors la désactivation (218) d'un visionnage de contenu privé.

2. Procédé mis en oeuvre par ordinateur selon la revendication 1, dans lequel la valeur d'identification de client composite est transformée en utilisant une transformation irréversible.

3. Procédé mis en oeuvre par ordinateur selon la revendication 1, dans lequel la transformation de la valeur d'identification de client composite comprend le hachage de la valeur d'identification de client composite.

4. Procédé mis en oeuvre par ordinateur selon la revendication 1, dans lequel la transformation de la valeur d'identification de client composite comprend la digestion de la valeur d'identification de client composite.

5. Procédé mis en oeuvre par ordinateur selon la revendication 1, dans lequel le témoin de connexion comprend un témoin de connexion persistent.

6. Procédé mis en oeuvre par ordinateur selon la revendication 1, dans lequel le témoin de connexion comprend un témoin de connexion de session.

7. Procédé mis en oeuvre par ordinateur selon la revendication 1, dans lequel le témoin de connexion contient une valeur d'identification de client chiffrée côté serveur.

8. Procédé mis en oeuvre par ordinateur selon la revendication 7, dans lequel la valeur d'identification de client chiffrée côté serveur est comprise dans une portion signée du témoin de connexion.

9. Procédé mis en oeuvre par ordinateur effectué sur un serveur (110), le procédé comprenant :
la réception d'une valeur d'identification de client composite créée suivant le procédé selon la revendication 1 à partir d'un ordinateur client (120) ;
la réception (320) d'un témoin de connexion à partir de l'ordinateur client (120), le témoin de connexion comprenant une valeur d'identification de client composite chiffrée côté serveur ;
le déchiffrement de la valeur d'identification de client composite chiffrée côté serveur ;
la comparaison de la valeur d'identification de client composite déchiffrée avec la valeur d'identification de client composite ; et
si la valeur d'identification de client composite déchiffrée ne correspond pas à la valeur d'identification de client composite, alors la dé-authentification du client.

10. Procédé mis en oeuvre par ordinateur selon la revendication 9, dans lequel la dé-authentification du client comprend la réémission d'une page de connexion pour le client.

11. Procédé mis en oeuvre par ordinateur selon la revendication 9, comprenant en outre: la génération d'une valeur d'identification générée par serveur; l'envoi de la valeur d'identification générée par serveur à l'ordinateur client (120) par l'intermédiaire d'un canal sécurisé ; la réception de l'identification de client composite ; le chiffrement de la valeur d'identification de client composite ; l'insertion de la valeur d'identification de client composite dans un témoin de connexion ; et la transmission du témoin de connexion à l'ordinateur client (120).

12. Ordinateur client (120) comprenant :
un composant de gestion de témoins de connexion (128) adapté pour envoyer et recevoir un ou plusieurs témoins de connexion ; et
un composant de script (126) adapté pour exécuter un ou plusieurs scripts, dans lequel les un ou plusieurs scripts comprennent un ou plusieurs scripts utilisables pour effectuer des opérations comprenant :
la réception (202) d'une valeur d'identification générée par serveur à partir d'un serveur (110) ;
la génération (204) d'une valeur d'identification de client ;
la création (206) d'une valeur d'identification de client composite à partir de la valeur d'identification de client générée par serveur et de la valeur d'identification côté client ;
la transformation (208) de la valeur d'identification de client composite ; et
le renvoi (210) de la valeur d'identification de client composite dans un témoin de connexion au serveur (110) ;
dans lequel le composant de gestion de témoins de connexion (128) est utilisable pour recevoir (212) un témoin de connexion à partir du serveur (110), le témoin de connexion comprenant une valeur d'identification de client composite transformée côté client ; et les un ou plusieurs scripts comprennent un ou plusieurs scripts utilisables pour :
comparer (214) la valeur d'identification de client composite transformée côté client avec la valeur d'identification de client composite ; et
si la valeur d'identification de client composite transformée côté client ne correspond pas à la valeur d'identification de client composite, alors la désactivation (218) d'un visionnage de contenu privé.

13. Serveur (110) comprenant :
un composant de gestion de témoins de connexion (116) adapté pour envoyer et recevoir un ou plusieurs témoins de connexion,
un composant de chiffrement (112) adapté pour chiffrer les un ou plusieurs témoins de connexion ; et
un composant d'authentification (114) adapté pour : authentifier les un ou plusieurs témoins de connexion ; lire une valeur d'identification de client composite à partir des un ou plusieurs témoins de connexion, la valeur d'identification de client composite étant créée à partir d'une valeur d'identification de client générée par serveur et d'une valeur d'identification côté client ; et dé-authentifier un client si la valeur d'identification de client composite ne correspond pas à la valeur d'identification de client composite chiffrée côté serveur.

14. Serveur selon la revendication 13, dans lequel le composant d'authentification (114) est adapté pour réémettre une page de connexion pour un client lors de la détection du fait que la valeur d'identification de client ne correspond pas à la valeur d'identification de client chiffrée côté serveur.

15. Support lisible par machine ayant des instructions exécutables par ordinateur pour effectuer un procédé selon l'une quelconque des revendications 1 à 11.
